(19) Europäisches Patentamt
European Patent Office
Office européen des brevets

(11) EP 0 598 333 B1

## (12) EUROPEAN PATENT SPECIFICATION

(45) Date of publication and mention
of the grant of the patent:
**06.05.1998 Bulletin 1998/19**

(51) Int Cl.6: **H04N 5/44**

(21) Application number: **93118264.6**

(22) Date of filing: **11.11.1993**

(54) **Method and apparatus for field rate upconversion**

Methode und Vorrichtung zur Erhöhung der Bildfrequenz

Méthode et appareil pour la conversion vers le haut de la fréquence image

(84) Designated Contracting States:
**DE ES FR GB IT**

(30) Priority: **19.11.1992 EP 92403119**

(43) Date of publication of application:
**25.05.1994 Bulletin 1994/21**

(73) Proprietor: **THOMSON multimedia**
**92648 Boulogne Cédex (FR)**

(72) Inventors:
• **Knee, Michael**
**F-67000 Strasbourg (FR)**
• **Madeleine, Dominique**
**F-50570 Montreuil sur Lozon (FR)**

(74) Representative:
**Hartnack, Wolfgang, Dipl.-Ing. et al**
**Deutsche Thomson-Brandt GmbH**
**Licensing & Intellectual Property,**
**Göttinger Chaussee 76**
**30453 Hannover (DE)**

(56) References cited:
EP-A- 0 372 774          EP-A- 0 414 596
EP-A- 0 415 325          US-A- 4 845 557

• IEEE TRANSACTIONS ON CONSUMER
ELECTRONICS vol. 35, no. 3, August 1989, NEW
YORK (US) pages 272 - 278 P. HAAVISTO ET AL.
'FRACTIONAL FRAME RATE UP-CONVERSION
USING WEIGHTED MEDIAN FILTERS'
• PATENT ABSTRACTS OF JAPAN vol. 11, no. 288
(E-542)17 September 1987 & JP-A-62 086 981

## Description

The present invention relates to a method and to an apparatus for field rate upconversion.

Background

There are a lot of field rate upconversion algorithms. One example is described in "Fractional frame rate up-conversion using weighted median filters", P.Haavisto et al., IEEE Transactions on Consumer Electronics, Vol.35, No.3, August 1989, pages 272-278, which uses weighted median filtering and a motion detector. The known algorithms show a poor motion portrayal and undesirable artefacts.
US-A-4 845 557 discloses a field motion suppression technique in an interlaced frozen video display using a motion detector. That detector makes use of pixel value difference signals.

Invention

It is one object of the invention to disclose a method for field rate upconversion with improved motion portrayal and a reduction of visible artefacts. This object is achieved by the method disclosed in claim 1.
It is a further object of the invention to disclose an apparatus which utilises the inventive method. This object is achieved by the apparatus disclosed in claim 8.
Advantageous additional embodiments of the invention are resulting from the respective dependent claims.
The algorithm described interpolates an intermediate field for a 100Hz display from two consecutive fields of a 50Hz interlace signal but could also be used at other rates, for example 60Hz to 120Hz conversion. Note that this application does not describe the method of speeding up the existing and interpolated fields to provide a 100Hz output, which is a simple and known operation.
The invention can be used for interpolating fields to provide an AABB scanning pattern as shown here:

```
field type     A A B B A A B B
               * X       * X
                   * X       * X        * input sample
               * X       * X            X interpolated sample
                   * X       * X
field number 1 2 3 4 1 2 3 4            vertical ↑
             |←40ms→|                          → temporal
```

The invention (100Hz algorithm) can be used in conjunction with any interlace-to-progressive scan conversion (proscan) algorithm to produce fields for an ABAB scanning pattern:

```
field type     A B A B A B A B
               *   +   *   +          + proscan interpolated
                 X O X   X O X        * input sample
               *   +   *   +          X interpolated sample
                 X O X   X O X        O input sample not
field number 1 2 3 4 1 2 3 4             appearing in output
             |←40ms→|                 vertical ↑
                                             → temporal
```

Here, the second field in the sequence is calculated using the 100Hz algorithm with the two input fields interchanged, the third field using the proscan algorithm and the fourth field using the 100Hz algorithm as described. An advantage of this approach using ABAB scanning is that line flicker is eliminated, while the main disadvantages are of additional complexity owing to the need for forward and time-reversed operation of the 100Hz algorithm and the addition of the proscan algorithm.

The description below relates to the luminance component of the signal. For the colour difference components, a similar or simpler algorithm could be used.

The algorithm calculates each pixel X of the intermediate fields from nearby pixels in the existing fields using an adaptive linear filter characterised by the following steps:

- Calculation of *sums of differences*, one or more for each pixel involved in the adaptive filter;
- Calculation of *basic coefficients,* one for each pixel involved in the adaptive filter;
- One-dimensional *median filtering* of coefficients;
- Two-dimensional *linear filtering* of coefficients;
- *Normalization* of coefficients;
- Calculation of main interpolated pixel value;
- Correction of interpolation in the case of *fast motion.*

Each of these steps is described in detail below. For most of the steps several variations are possible. Two of these variations will be referred to as the reference algorithm and the simplified algorithm. The reference algorithm gives good performance on a wide variety of picture material. The simplified algorithm also appears to give good performance and is simpler to implement in hardware.

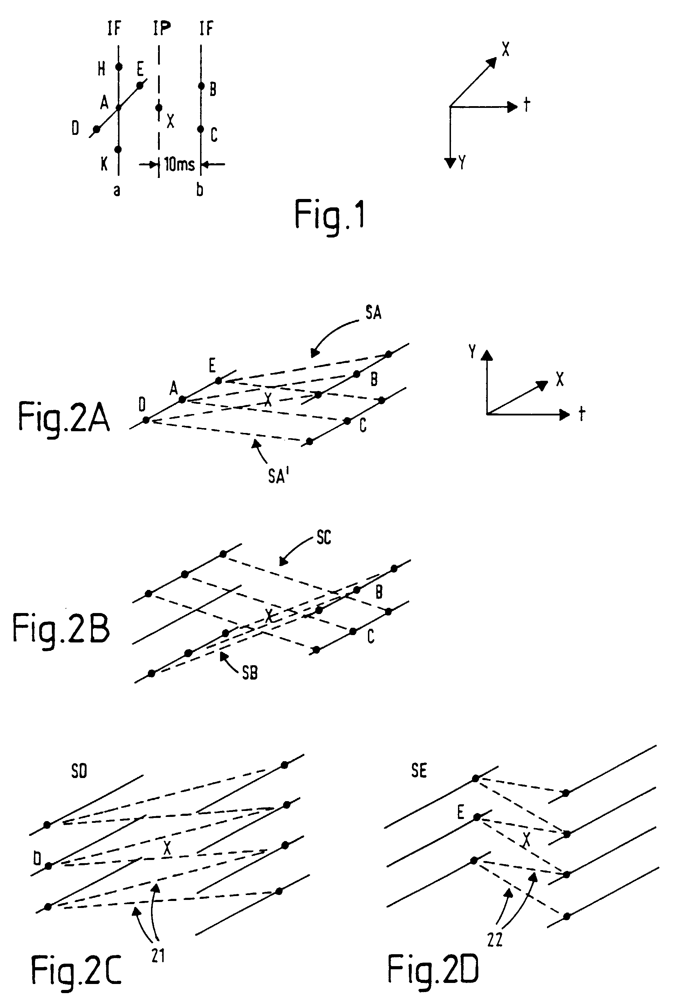

In the reference algorithm, the pixels involved in the main interpolation are the set (A B C D E) shown in Fig. 1. Also additional samples could be used. Other versions of the invention use only the set (A B C) or the set (A D E H K). In Fig. 1 the samples A-C, H, K and X are located in the vertical-temporal (y, t) plane. Samples A, D, E and X are located in the horizontal-temporal (x, t) plane. Interpolated fields IP are located between input fields IF. Other pixels used in the algorithm will be referred to by a system of coordinates (y, x) based on pixels and picture-lines, referred to an origin at the interpolated pixel X. Pixels in the preceding input field are called a(y, x) and pixels in the next input field b(y, x). The pixels of Fig. 1 mentioned above therefore have the following coordinates:

$$A = a( 0,0)$$
$$B = b(-1,0)$$
$$C = b( 1,0)$$
$$D = a(0, -1)$$
$$E = a(0, 1)$$

## Calculation of sums of differences

With each pixel A, B, ... involved in the main interpolation is associated a sum SA, SB, ...of e.g. three (absolute) differences which will be used to determine how important a contribution the pixel will make to the interpolation. The smaller the sum of differences, the larger the contribution of the associated pixel will be. At first, one or two principal differences are assigned to each pixel used in the adaptive filter, each involving two pixels of which one is the input pixel and the other a pixel as nearly as possible opposite (minimum deviation angle) the input pixel with respect to the interpolated pixel X.

For example, the principal difference corresponding to input pixel C, or b(1,0), is Ib(1,0) - a(-2,0)I and the two principal differences corresponding to input pixel E, or a(0,1), are Ia(0,1) - b(-1,-1)I and Ia(0,1) - b(1,-1)I.

Input pixels in the line containing D, A and E have two principal differences (because of the symmetry of this line with respect to X); all others have one.

The principal difference is already a measure of the importance of its associated pixel, but to make a more reliable measure a sum of absolute values of the principal difference and two parallel differences is taken. For pixels B and C which represent vertical displacements relative to X, the parallel differences are those to the left and right of the principal difference, while for D and E which represent horizontal displacements, the parallel differences are those above and below the principal difference. For pixels having two principal differences, the minimum of the two corresponding sums of differences is taken.

For example, the sum of differences SC associated with input pixel C is:

$$SC = Ib(1,0) - a(-2,0)I + Ib(1,-1) - a(-2,-1)I$$

$$+ Ib(1, 1) - a (-2, 1)I$$

and the sum of differences SE associated with input pixel E is:

$$SE = \min \{|a(0,1) - b(-1,-1)| + |a(-2,1) - b(-3,-1)|$$

$$+ |a(2,1) - b(1,-1)|,$$

$$|a(0,1) - b(1,-1)| + |a(-2,1) - b(-1,-1)|$$

$$+ |a(2,1) - b(3,-1)|\} .$$

The pixel A is a special case. Its three differences can be adjacent either horizontally (as in the reference algorithm) or vertically and its sum of differences can be expressed either as a minimum, as for D and E, or (in the reference algorithm) the two sums kept separate as SA and SA' and carried over to the next stage of the algorithm.
Fig. 2A depicts the samples involved for the calculation of SA and SA'. Correspondingly, Fig. 2B relates to SB and SC, Fig. 2C to SD and Fig. 2D to SE. For SD and SE, respectively, the minimum of two sums 21 and 22, respectively, is elected.
In the simplified algorithm, the principal differences do not contribute to the sums of differences; only the two adjacent differences are used.

**Calculation of basic coefficients**

The next step is to calculate for each input pixel A, B, ... a basic coefficient VA, VB, ... which depends on the associated sum of differences using one of two methods which take into account the global distribution of the sums of differences. The method of the reference algorithm is to sort the sums of differences in ascending order as S1 to S6 and then associate values of 6, 3, 2, 1 or 0 with each sum, depending on a measure of overall activity based on the sums of differences, for example according to the following list:

If no sums < threshold, V1=V2=V3=V4=V5=V6=0
If one sum < threshold, V1=6, V2=V3=V4=V5=V6=0
If two sums < threshold, V1=V2=3, V3=V4=V5=V6=0
Otherwise, V1=3, V2=2, V3=1, V4=V5=V6=0.

Here, V1 is the value associated with the smallest sum, V2 with the next smallest and so on. The above step is designed to give large values to small differences and to involve more pixels when there are several small differences than when the overall activity is high. In the reference algorithm, the threshold is equal to 64 (with respect to 8-bit quantization).
In a second version, associated with the three lowest sums S1, S2, S3 are values V1, V2, V3 which depend on the number of sums amounting to less than the threshold. Correspondingly, V4, V5 and V6 are cancelled in the list above.
Each basic coefficient is then set to one of the values Vn depending on where its associated sum of differences falls in the ordered list. In the above example, if SE is the second lowest sum of differences and there are four sums less than the threshold, its basic coefficient VE will be set to V2=2. The basic coefficient VA may be the sum of two values. For example, if SA is the lowest and SA' the fifth lowest and two sums are below the threshold, the basic coefficient VA will be set to V1+V5 = 3+0 = 3.
A further method of calculating the basic coefficients, designed to be simpler to implement in hardware, is to compare the sums of differences with an increasing threshold, assigning a basic coefficient when its sum of differences is less than the threshold and stopping the process when the sum of basic coefficients reaches a predetermined value. In one version, the threshold takes values of 8, 16, 32 and 64 successively, sums of differences less than 8 are given basic coefficients of 4, sums between 8 and 16 are given basic coefficients of 3, sums between 16 and 32 are given 2 and sums between 32 and 64 are given 1, the process of assigning coefficients stopping when the sum reaches or exceeds 10. For example, the values of sums of differences and of associated basic coefficients may be as follows:

SA = 24, VA = 2+1 = 3
SA'= 34
SB = 7, VB = 4
SC = 55, VC = 1
SD = 42, VD = 0
SE = 19, VE = 2 .

Here, the process stops before VD is given a value even though it is in the range leading to a value of 1, because the sum of coefficients reached 10 when VC was set to 1. In the simplified algorithm, the value assigned to each basic coefficient is always 1 (or 2 for VA ) but the process of successively raising the threshold is still carried out as described above, this time stopping when the sum reaches 2, for example.

**One-dimensional median filtering of coefficients**

This is an optional step, carried out on each basic coefficient to reduce the effects of noise and of 'wrong decisions' in previous steps resulting from particularly difficult structures in the picture. In the reference algorithm, the median filter uses three samples in a line but spread over a five-sample window (1 0 1 0 1). This is preferred to a simple window of three adjacent samples because of the horizontal smoothing already carried out by taking sums of adjacent differences. Median filtering can be omitted in the simplified algorithm.

**Two-dimensional linear filtering of coefficients**

The next step is to pass each basic coefficient, after median filtering if used, through a two-dimensional linear filter, for example with the following window which is used in the reference algorithm (values expressed in multiples of 1/64):

$$
\begin{array}{ccccc}
 & 4 & 6 & 4 & \\
4 & 8 & 12 & 8 & 4 \\
 & 4 & 6 & 4 & \\
\end{array}
$$

Such a filter requires two line delays for each coefficient but it should be noted that the ranges and combinations of possible basic coefficient values are limited as a result of the steps described above. These limitations can be exploited in order to minimize the memory requirements. In the simplified algorithm, an example of a suitable window is as follows, in multiples of 1/16:

$$
\begin{array}{ccc}
 & 2 & \\
3 & 6 & 3 \\
 & 2 & \\
\end{array}
$$

At the output of this step, the five coefficients are called CA, CB, CC, CD and CE.

**Correction for fast motion**

At this stage, a correction is made for fast motion which in some versions of the algorithm involves the introduction of further pixels into the interpolation. Fast motion is detected by calculating for each pixel the sum S of the five coefficients and applying a simple linear law to produce a fast motion indicator CF , for example $CF = \max\{1/2*S_{max} - S, 0\}$ where $S_{max}$ is a nominal maximum value of the sum of coefficients (In fact, $S_{max}$ is the maximum value of the sum of coefficients at the input to the two-dimensional linear filter multiplied by the d.c. gain of that filter).

In the reference algorithm, 1/5 of the value of the fast motion indicator is simply added to each of the five coefficients to produce a blurring effect in fast-moving areas, an effect preferable to the double image that might otherwise be obtained. Especially, a value of (48*6-S)/5, if positive, can be added to each filtered coefficient.

In other versions of the algorithm, the fast motion indicator gives the values of further coefficients which are used to provide additional blurring. For example, in the simplified algorithm a coefficient of CF/4 is assigned to each of a(-2,-1), a(2,1), b(-1,1) and b(1,-1). In another version, the coefficient CF is assigned to the median of those four pixels and in yet another, CF is assigned to an average over a 5 times 3 window.

It is also possible to derive the fast motion indicator from coefficients that have passed through a filter other than the two-dimensional window given above. In particular, good results have been obtained with a cross-shaped window of five pixels, i.e. having no diagonal elements, while still using the larger window for the filtering of coefficients in the main path. This modification has the advantage that the fast motion indicator is less likely to 'leak' into areas that are near to but not part of fast moving objects.

**Normalization of coefficients**

The last step in the calculation of coefficients is to scale the set of filtered coefficients for each pixel in turn by a constant so that their sum is equal to '1'. In practice, the normalization can also be carried out as a final step in the process by dividing the interpolated pixel value by the sum of the coefficients.

**Calculation of main interpolated pixel value**

This step is self-evident once the coefficients have been calculated and normalized. The value of the interpolated pixel X is the sum of products of the coefficients and the corresponding input pixel values.

In principle the inventive method consists in field rate upconversion using adaptive interpolation, wherein each pixel (X) value of an interpolated field (IP) is calculated using an adaptive filter the input of which are original pixel values spatially-temporally surrounding that pixel value to be interpolated (X), and comprises the following steps:

- calculation (32; DA1-DAIII, 411-418, 421-426) of one or more sums of absolute pixel value differences (SA, SA', SB, SC, SD, SE) for the pixels involved (A, B, C, D, E) in said adaptive filter and associated with the pixel value (X) to be interpolated;
- for each of the pixels involved in said adaptive filter a basic coefficient (VA, VB, VC, VD, VE) is calculated (33; 430-436) which depends on said sums, wherein the smaller said sum, the larger the contribution of the associated pixel is in said adaptive filter;
- horizontal-vertical linear filtering (351-356; 441-445) of each of said basic coefficients to form filtered coefficients (CA, CB, CC, CD, CE);
- calculation of the value of the pixel to be interpolated (X) by combining (38; 492, 494, 496, 498) the pixel values involved in said adaptive filter after having been multiplied (371-375; 491, 493, 495, 497, 499) with the respective of said filtered coefficients;
- calculation (36; 481, 482, 487, LD+1T) of correction values which are combined (485) in case of fast motion with each of said filtered coefficients or with the value for said pixel (X) to be interpolated;
- normalization (39; 483, 487, 484, 486) of the value for said pixel (X) to be interpolated or of the motion corrected coefficients.

Advantageous additional embodiments of the inventive method are resulting from the respective dependent claims.

In principle the inventive apparatus as set out in claim 8 for field rate upconversion using adaptive interpolation, wherein each pixel (X) value of an interpolated field (IP) is calculated using an adaptive filtering the input of which are original pixel values spatially-temporally surrounding that pixel value to be interpolated (X), comprises:

- first calculation means (32; DA1-DAIII, 411-418, 421-426) for one or more sums of absolute pixel value differences (SA, SA', SB, SC, SD, SE) for the pixels involved (A, B, C, D, E) in said adaptive filtering and associated with the pixel value (X) to be interpolated;
- second calculation means (33; 430-436)for calculating for each of the pixels involved in said adaptive filtering a basic coefficient (VA, VB, VC, VD, VE) which depends on said sums, wherein the smaller said sum, the larger the contribution of the associated pixel is in said adaptive filtering;
- horizontal-vertical linear filter means (351-356; 441-445) for each of said basic coefficients to form filtered coefficients (CA, CB, CC, CD, CE);
- combining means (38; 492, 494, 496, 498) for calculating the value of the pixel to be interpolated (X) from the pixel values involved in said adaptive filtering after having been multiplied in multiplier means (371-375; 491, 493, 495, 497, 499) with the respective of said filtered coefficients;
- third calculation means (36; 481, 482, 487, LD+1T) for calculating correction values which are combined (485) in case of fast motion with each of said filtered coefficients or with the value for said pixel (X) to be interpolated;
- normalization means (39; 483, 487, 484, 486) for adjusting the value for said pixel (X) to be interpolated or of the motion corrected coefficients.

An advantageous additional embodiment of the inventive apparatus is resulting from the respective dependent claim.

<u>Drawings</u>

Preferred embodiments of the invention are described with reference to the accompanying drawings, which show in:

Fig. 1    spatial-temporal position of samples;
Fig. 2    sample positions related to sums of differences;
Fig. 3    simplified block diagram of an apparatus according to the reference algorithm;
Fig. 4    block diagram for an apparatus according to the simplified algorithm.

<u>Preferred embodiments</u>

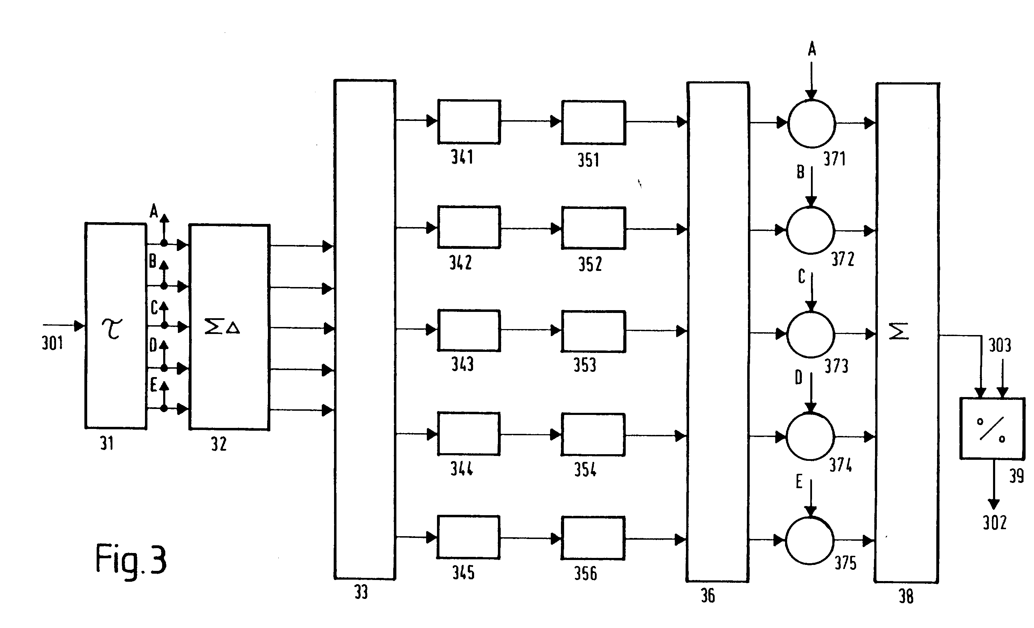

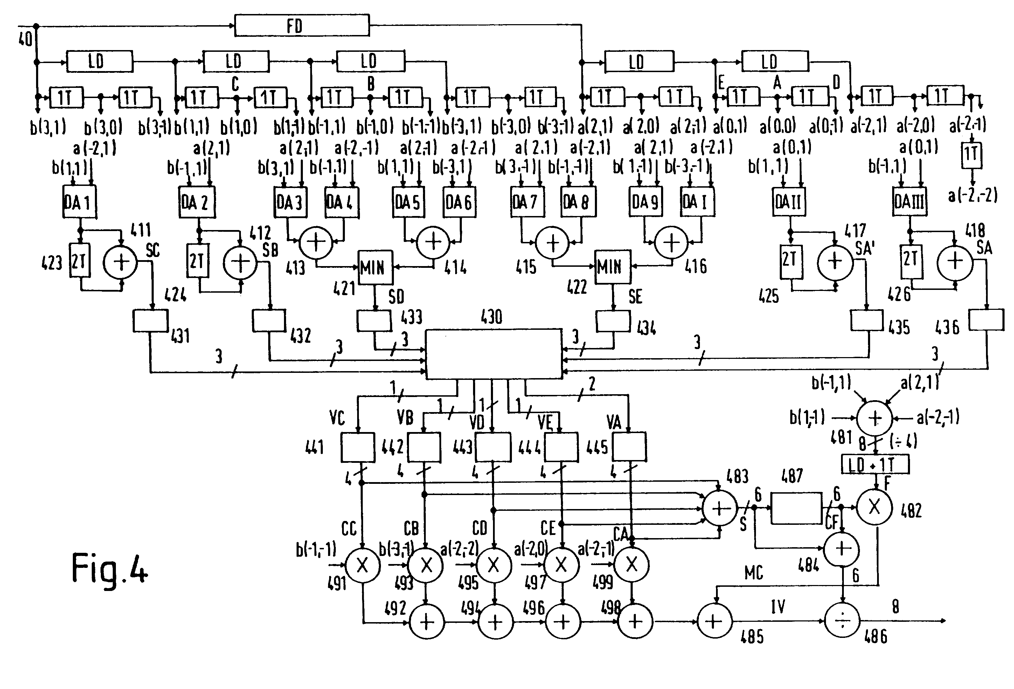

In Fig. 3 the input signal, e.g. a TV signal of 625 or 1250 lines, 50Hz, 2:1 is fed to delay means 31 which output the samples A to E involved in the following calculations. The delay means may use field delays FD, line delays LD and one-sample-delays 1T as depicted in Fig. 4. The circuitry of the delay means can easily be adapted to any required sample locations. These samples are fed to multiplier means 371-375 and are used in a sums-of-differences circuit 32 to calculate the sums SA, SA', SB, SC, SD and SE. These sums pass a coefficient calculator 33 which outputs respective basic coefficients VA, VB, VC VE and VD.

Each of these coefficients passes a respective branch which is composed of median filter means 341-345 and a subsequent two-dimensional filtering means 351-356. The output signal of each branch passes a fast-motion correction stage 36 which adds a respective correction value to each filtered coefficient, thereby producing a blurring effect.

In subsequent multipliers 371-375 the sample values A-E are weighted by the corrected coefficients and combined in adder means 38. The output signal of this adder becomes normalized in subsequent dividing means 39 using at input 303 the sum of the corrected coefficients (respective adding means are not depicted). The final sample value X is available at the output 302.

The order of some processing steps can be modified, e.g. the normalisation can be executed in combination with the weighting step. Also, one or more of the processing steps (e.g. fast-motion correction, median filtering, two-dimensional filtering) may be omitted.

**Simplified algorithm**

The following description is designed to clarify the description of the simplified algorithm explained above. The description refers to the block diagram in Fig. 4. Compensating delays are not shown in the block diagram except where the delays being compensated are fundamental to the algorithm. In order to provide the sample values needed for calculating the sums of differences, a set of field (FD), line (LD) and sample (1T) delays is required.

These sample values are fed to difference circuits DA1-DAIII. These circuits contain a subtractor followed by an absolute value calculator. The sums of differences are then formed, either by using a two sample-delay (2T) 423, 424, 425, 426, each delaying the second input of a subsequent adder 411, 412, 417, 418, or by combining the outputs of each two circuits DA3+DA4, DA5+DA6, DA7+DA8 and DA9+DAI in an adder 413, 414, 415 and 416, respectively, the outputs of each two of which (413+414, 415+416) are fed to a minimum value circuit 421, 422. Adders 411, 412, minimum value circuits 421, 422, and adders 417, 418 output the sums SC, SB, SD, SE, SA' and SA, respectively. Note that here only two differences are involved in each sum, those on either side of the principal difference. In the case of sums SA, SA', SB and SC the sums are shown here carried out on a rolling basis across the two-sample delays 2T.

The calculation of basic coefficients is carried out in subsequent comparators 431-436, respectively, and in a coefficient calculator 430. For each sum, the comparators compare the value of the sum with four thresholds '8', '16', '32' and '64', producing one of five answers which is shown emerging from each comparator as a 3-bit number. The comparators are thus, in effect, non-linear quantizers. Coefficient calculator 430 takes all six quantized values and calculates five respective coefficients VC, VB, VD, VE and VA. Initially it calculates six one-bit values of which the two corresponding to the smallest (quantized) input values are '1' and the other four are '0'. The coefficient VA is then the sum of the two one-bit values corresponding to SA and SA' and the other coefficients are simply the one-bit values themselves. Note that if only one of the sums is less than '64', the highest threshold, then only one coefficient is set to '1' and if all sums exceed '64' then all coefficients are set to '0'.

For each basic coefficient, filter circuits 441-445, respectively, perform the 5-tap spatial filtering operation according to the window given above. Note that each filter requires two line delays but only of one- or two-bit values.

For fast motion correction, the sum S of the filtered coefficient values from the outputs of filters 441-445 is formed in an adder 483 and passed through motion coefficient value circuit 487 which calculates the fast motion coefficient CF = max{1-S, 0). This coefficient acts in a multiplier 482 on the blurred signal F emerging from a one-line-and-one-sample delay LD+1T which follows the averaging of the four pixel values $b(1,-1)$, $b(-1,1)$, $a(2,1)$ and $a(-2,-1)$ in a combiner 481. This delay is necessary to compensate for the theoretical delay in the coefficient filters 441-445. It could equally have been implemented by taking the four pixel values to combiner 481 from appropriate points in the set of delays mentioned above, but in any case this would necessitate an additional line delay at the end of the chain.

The five filtered coefficients CC, CB, CD, CE and CA at the output of filters 441-445 are then multiplied in respective multipliers 491-499 by five pixel values $b(-1,-1)$, $b(-3,-1)$, $a(-2,-2)$, $a(-2,0)$, $a(-2,-1)$ corresponding to samples A, B, C, D and E but delayed by one line and one pixel to compensate for the theoretical delay in the coefficient filters 441-445. The resulting partial sums are added together in adders 492-498 and in adder 485 to the partial sum MC (resulting from fast motion correction) at the output of multiplier 482, to form the interpolated value IV prior to normalization. Finally, the interpolated value is divided in a divider 486 by the sum of all the coefficients CA + CB + CC + CD + CE + CF which has been calculated in an adder 484 from the output of adder 483 and circuit 487. This operation has the same function as normalizing the coefficients.

Artefacts like double image and 'mouse teeth' structures can be avoided by the invention.

The invention may be used in TV receivers or VCR's or any other display units. The numbers given can easily be adapted to different TV standards or input signal characteristics. Also, 50 to 75Hz upconversion can be carried out, if respective modifications are made.

## Claims

1. Method for field rate upconversion using adaptive interpolation, wherein a pixel (X) value for a field (IP) to be interpolated is calculated using an adaptive filter the input of which being formed by original pixel values spatially-temporally surrounding that pixel value to be interpolated (X), **characterised** by the following steps:

   - calculating (32; DA1-DAIII) principal differences between input pixels involved (A, B, C, D, E) in said adaptive filter, in each case between a current input pixel and a pixel as nearly as possible opposite the input pixel with respect to the pixel (X) to be interpolated, wherein 'opposite' means an input pixel corresponding to the minimum deviation angle within the input pixels spatially-temporally surrounding said pixel (X) to be interpolated;
   - calculating (32; 411-418, 421-426) in each case for a pixel value (X) to be interpolated, the sum (SA, SA', SB, SC, SD, SE) of the absolute value of a principal difference and of the two absolute values for differences between adjacent input pixels which are arranged in parallel with respect to the current principal difference, wherein for input pixels (B, C) which represent vertical displacements with respect to said pixel (X) to be interpolated the two parallel differences are those to the left and right of the principal difference and for pixels (D, E) which represent horizontal displacements with respect to said pixel (X) to be interpolated the two parallel differences are those above and below the principal difference;
   - calculating (33; 430-436) in each case for the pixels involved in said adaptive filter a set of basic coefficients (VA, VB, VC, VD, VE) which depend on said sums, wherein the smaller said sum, the larger is the contribution of the associated pixel in said adaptive filter;
   - horizontal-vertical linear filtering (351-356; 441-445) of each set of basic coefficients to form filtered coefficients (CA, CB, CC, CD, CE);
   - calculating the value of the pixel to be interpolated (X) by combining (38; 492, 494, 496, 498) the pixel values involved in said adaptive filter after having been multiplied (371-375; 491, 493, 495, 497, 499) with the respective of said filtered coefficients including normalisation (39; 483, 487, 484, 486).

2. Method according to claim 1, wherein in case of fast motion correction values (36; 481, 482, 487, LD+1T) are combined (485) with each of said filtered coefficients or with the value for said pixel (X) to be interpolated and wherein these fast motion correction values are taken into account for said normalisation.

3. Method according to claim 1 or 2, wherein prior to said horizontal-vertical linear filtering said basic coefficients (VA, VB, VC, VD, VE) are median filtered (341-345) one-dimensionally, in particular horizontally, and in particular using three samples in a line but spread over a five-sample window.

4. Method according to any of claims 1 to 3, wherein for those pixels (A) involved in said adaptive filter which are temporally adjacent and of identical spatial location with respect to the pixel (X) to be interpolated two of said sums (SA, SA') related to horizontal and vertical adjacent pixels are calculated and either both or the minimum of both is used for calculating said basic coefficients.

5. Method according to any of claims 2 to 4, wherein for calculating (36; 481, 482, 487, LD+1T) said fast motion correction values (MC) for each pixel a sum S of said filtered coefficients is produced and added (484) to a fast motion indicator CF,

   for example

$$CF = \max \{1/2 \cdot S_{max} - S, 0\} \, ,$$

where $S_{max}$ is a nominal maximum value of the sum S.

6. Method according to any of claims 2 to 5, wherein for calculating (36; 481, 482, 487, LD+1T) said fast motion correction values (MC) a cross-shaped window of five pixels is used.

7. Method according to any of claims 1 to 6, wherein said adaptive filter is applied to a luminance component only.

8. Apparatus for field rate upconversion using adaptive interpolation, wherein a pixel (X) value for a field (IP) to be interpolated is calculated using an adaptive filter the input of which being formed by original pixel values spatially-temporally surrounding that pixel value to be interpolated (X), characterized by:

- first calculation means (32; DA1-DAIII, 411-418, 421-426) for calculating (32; DA1-DAIII) principal differences between input pixels involved (A, B, C, D, E) in said adaptive filter, in each case between a current input pixel and a pixel as nearly as possible opposite the input pixel with respect to the pixel (X) to be interpolated, wherein 'opposite' means an input pixel corresponding to the minimum deviation angle within the input pixels spatially-temporally surrounding said pixel (X) to be interpolated
and for calculating (32; 411-418, 421-426) in each case for a pixel value (X) to be interpolated, the sum (SA, SA', SB, SC, SD, SE) of the absolute value of a principal difference and of the two absolute values for differences between adjacent input pixels which are arranged in parallel with respect to the current principal difference, wherein for input pixels (B, C) which represent vertical displacements with respect to said pixel (X) to be interpolated the two parallel differences are those to the left and right of the principal difference and for pixels (D, E) which represent horizontal displacements with respect to said pixel (X) to be interpolated the two parallel differences are those above and below the principal difference;
- second calculation means (33; 430-436) for calculating in each case for the pixels involved in said adaptive filtering a set of basic coefficients (VA, VB, VC, VD, VE) which depends on said sums, wherein the smaller said sum, the larger the contribution of the associated pixel is in said adaptive filter;
- horizontal-vertical linear filter means (351-356; 441-445) for each set of basic coefficients to form filtered coefficients (CA, CB, CC, CD, CE);
- combining means (38; 492, 494, 496, 498) for calculating the value of the pixel (X) to be interpolated from the pixel values involved in said adaptive filtering after having been multiplied in multiplier means (371-375; 491, 493, 495, 497, 499) with the respective of said filtered coefficients;
- optionally third calculation means (36; 481, 482, 487, LD+1T) for calculating correction values which are combined (485) in case of fast motion with each of said filtered coefficients or with the value for said pixel (X) to be interpolated;
- normalisation means (39; 483, 487, 484, 486) for adjusting the value for said pixel (X) to be interpolated and including, in case of fast motion, said correction values.

9. Apparatus according to claim 8, wherein median filtering means (341-345) are arranged between said second calculation means (33; 430-436) and said horizontal-vertical linear filtering means (351-356; 441-445), which filter said basic coefficients (VA, VB, VC, VD, VE) one-dimensionally, in particular horizontally, and in particular using three samples in a line but spread over a five-sample window.

10. Apparatus according to claim 8 or 9 which operates only for luminance pixels (X) to be interpolated.

**Patentansprüche**

1. Verfahren zur Hochsetzung der Halbbildfrequenz unter Verwendung einer adaptiven Interpolation, worin ein Pixelwert (X) für ein zu interpolierendes Halbbild (IP) unter Verwendung eines adaptiven Filters berechnet wird, dessen Eingangssignal durch Ausgangspixelwerte gebildet wird, die den zu interpolierenden Pixelwert (X) räumlich-zeitlich umgeben, gekennzeichnet durch die folgenden Schritte:

- Berechnung (32; DA1-DAIII) der Grunddifferenzen zwischen den in dem adaptiven Filter beteiligten Pixeln (A, B, C, D, E), in jedem Fall zwischen einem laufenden Eingangspixel und einem Pixel, das so nahe wie möglich bezüglich des zu interpolierenden Pixels (X) gegenüber dem Eingangspixel liegt, worin "gegenüber" ein Eingangspixel entsprechend dem minimalen Abweichungswinkel innerhalb der Eingangspixel bedeutet, die das zu interpolierende Pixel (X) räumlich-zeitlich umgeben;
- Berechnung (32; 411-418, 421-426), in jedem Fall für einen zu interpolierenden Pixelwert (X), der Summe (SA, SA', SB, SC, SD, SE) des Absolutwertes einer Hauptdifferenz und der beiden Absolutwerte für Differenzen zwischen benachbarten Eingangspixeln, die bezüglich der laufenden Hauptdifferenz parallel angeordnet sind, worin für Eingangspixel (B, C), die vertikale Verschiebungen zu dem zu interpolierenden Pixel (X) darstellen, die beiden parallen Differenzen diejenigen links und rechts der Hauptdifferenz sind, und für Pixel (D, E), die horizontale Verschiebungen zu dem zu interpolierenden Pixel (X) darstellen, die beiden parallelen Differenzen solche oberhalb und unterhalb der Hauptdifferenz sind;

- Berechnung (33; 430-436), in jedem Fall für die in dem adaptiven Filter beteiligten Pixel, eines Satzes von Basiskoeffizienten (VA, VB, VC, VD, VE), die von den Summen abhängen, worin, je kleiner die Summe, um so größer der Beitrag des zugehörigen Pixels in dem adaptiven Filter ist;

- eine horizontale-vertikale lineare Filterung (351-356; 441-445) jedes Satzes von Basiskoeffizienten zur Bildung von gefilterten Koeffizienten (CA, CB, CC, CD, CE);

- Berechnung des Wertes des zu interpolierenden Pixels (X) durch Kombinieren (38; 492, 494, 496, 498) der in dem adaptiven Filter beteiligten Pixelwerte, nachdem diese mit dem entsprechenden der gefilterten Koeffizienten multipliziert wurden (371-375; 491, 493, 495, 497, 499), einschließlich einer Normierung (39; 483, 487, 484, 486).

2. Verfahren nach Anspruch 1, worin im Falle einer schnellen Bewegung Korrekturwerte (36; 481, 482, 487, LS+1T) mit jedem der gefilterten Koeffizienten oder mit dem Wert für das zu interpolierende Pixel (X) kombiniert werden und worin diese Korrekturwerte für eine schnelle Bewegung für die Normierung in Betracht gezogen werden.

3. Verfahren nach Anspruch 1 oder 2, worin vor der horizontalen-vertikalen linearen Filterung die Basiskoeffizienten (VA, VB, VC, VD, VE) eindimensional, insbesondere horizontal, mediangefiltert werden (341-345), wobei insbesondere drei Abtastwerte in einer Zeile, jedoch verteilt über ein Fenster mit fünf Abtastwerten, verwendet werden.

4. Verfahren nach einem der Ansprüche 1 bis 3, worin für die in dem adaptiven Filter beteiligten Pixel (A), die zeitlich benachbart sind und eine identische Seitenlage relativ zu dem zu interpolierenden Pixel (X) aufweisen, zwei der Summen (SA, SA'), die sich auf die horizontal und vertikal benachbarten Pixel beziehen, berechnet werden und entweder beide oder das minimale von beiden für die Berechnung der Basiskoeffizienten verwendet wird.

5. Verfahren nach einem der Ansprüche 2 bis 4, worin für die Berechnung (36; 481, 482, 487, LS+1T) der Korrekturwerte (MC) für die schnelle Bewegung für jedes Pixel eine Summe S der gefilterten Koeffizienten erzeugt und einem Indikator CF für eine schnelle Bewegung hinzugefügt wird (484),
z.B.

$$CF = max\{/2 \cdot S_{max} - S, 0\} ,$$

wo $S_{max}$ ein nomineller Maximalwert der Summe S ist.

6. Verfahren nach einem der Ansprüche 2 bis 5, worin für die Berechnung (36; 481, 482, 487, LD+1T) der Korrekturwerte (MC) für eine schnelle Bewegung ein kreuzförmiges Fenster mit fünf Pixeln verwendet wird.

7. Verfahren nach einem der Ansprüche 1 bis 6, worin das adaptive Filter nur für eine Leuchdichtekomponente angewendet wird.

8. Vorrichtung für eine Hochsetzung der Halbbildfrequenz unter Verwendung einer adaptiven Interpolation, worin ein Pixelwert (X) für ein zu interpolierendes Halbbild (IP) unter Verwendung eines adaptiven Filters berechnet wird, dessen Eingangssignal durch ursprüngliche Pixelwerte gebildet ist, die den zu interpolierenden Pixelwert (X) räumlich-zeitlich umgeben, gekennzeichnet durch:

- erste Berechnungsmittel (32; DA1-DAIII, 411-418, 421-426) zum Berechnen (32; DA1-DAIII) der Hauptdifferenzen zwischen den in dem adaptiven Filter beteiligten Eingangspixeln (A, B, C, D, E), und zwar in jedem Falle zwischen einem laufenden Eingangspixel und einem Pixel, das so nahe wie möglich bezüglich des zu interpolierenden Pixels (X), gegenüber dem Eingangspixel liegt, worin "gegenüber" ein Eingangspixel entsprechend dem minimalen Abweichungswinkel in den Eingangspixeln bedeutet, die das zu interpolierende Pixel (X) räumlich-zeitlich umgeben und zum Berechnen (32; 411-418, 421-426), in jedem Fall für einen zu interpolierenden Pixelwert (X), der Summe (SA, SA', SB, SC, SD, SE) des Absolutwertes einer Hauptdifferenz und der beiden Absolutwerte der Differenzen zwischen benachbarten Eingangspixeln, die bezüglich der laufenden Hauptdifferenz parallel angeordnet sind, worin für Eingangspixel (B, C), die vertikale Verschiebungen relativ zu dem zu interpolierenden Pixel (X) darstellen, die beiden parallelen Differenzen diejenigen links und rechts der Hauptdifferenz sind, und für Pixel (D, E), die horizontale Verschiebungen bezüglich des zu interpolierenden Pixels (X) darstellen, die beiden parallen Differenzen diejenigen oberhalb und unterhalb der Hauptdifferenz sind;

- zweite Berechnungsmittel (33; 430-436) zum Berechnen, in jedem Fall für die in der adaptiven Filterung beteiligten Pixel, eines Satzes von Basiskoeffizienten (VA, VB, VC, VD, VE), die von den Summen abhängig sind, worin, je kleiner die Summe ist, um so größer der Beitrag des zugehörigen Pixels in dem adaptiven Filter ist;

- horizontale-vertikale lineare Filtermittel (351-356; 441-445) für jeden Satz der Basiskoeffizienten zur Bildung von gefilterten Koeffizienten (CA, CB, CC, CD, CE);

- Kombiniermittel (38; 492, 494, 496, 498) zum Berechnen des Wertes des zu interpolierenden Pixels (X) aus den in der adaptiven Filterung beteiligten Pixelwerten, nachdem diese in Multipliziermitteln (371-375; 491, 493, 495, 497, 499) mit dem jeweiligen der gefilterten Koeffizienten multipliziert wurden;

- wahlweise dritte Berechnungsmittel (36; 481, 482, 487, LD+1T) zum Berechnen der Korrekturwerte, die im Falle einer schnellen Bewegung mit jedem der gefilterten Koeffizienten oder mit dem Wert für das zu interpolierende Pixel (X) kombiniert werden (485);

- Normierungsmittel (39; 483, 487, 484, 486) zur Einstellung des Wertes für jedes zu interpolierende Pixel (X), das im Falle einer schnellen Bewegung die Korrekturwerte enthält.

9. Vorrichtung nach Anspruch 8, worin die medianen Filtermittel (341-345) zwischen den zweiten Berechnungsmitteln (33; 430-436) und den horizontalen-vertikalen linearen Filtermitteln (351-356; 441-445) angeordnet sind, die die Basiskoeffizienten (VA, VB, VC, VD, VE) eindimensional, insbesondere horizontal, filtern, und insbesondere drei Abtastwerte in einer Zeile, aber verteilt über ein Fenster mit fünf Abtastwerten verwenden.

10. Vorrichtung nach Anspruch 8 oder 9, die nur für zu interpolierende Leuchtdichtepixel (X) arbeitet.

## Revendications

1. Procédé pour la conversion vers le haut de la fréquence image en utilisant une interpolation adaptative, dans lequel la valeur d'un pixel (X) pour une image (IP) à interpoler est calculée en utilisant un filtre adaptatif dont l'entrée est formée par les valeurs du pixel d'origine entourant spatialement-temporellement la valeur du pixel à interpoler (X), caractérisé par les étapes suivantes :

   ◆ calcul (32 ; DA1-DAIII) des différences principales entre des pixels d'entrée impliqués (A, B, C, D, E) dans lesdits filtres adaptatifs, dans chaque cas entre un pixel d'entrée courant et un pixel opposé autant que possible au pixel d'entrée par rapport au pixel (X) à interpoler dans lequel « opposé » signifie un pixel d'entrée correspondant à l'angle de déviation minimum à l'intérieur des pixels d'entrée entourant spatialement-temporellement le dit pixel (X) à interpoler;

   ◆ calcul (32 ; 411-418, 421-426) dans chaque cas pour une valeur de pixel (X) à interpoler, de la somme (SA, SA', SB, SC, SD, SE) de la valeur absolue d'une différence principale et des deux valeurs absolues pour des différences entre des pixels d'entrée adjacents qui sont disposés en parallèle par rapport à la différence principale courante, dans lequel pour des pixels d'entrée (B, C) qui représentent des déplacements verticaux par rapport au pixel (X) à interpoler les deux différences parallèles sont celles vers la gauche et vers la droite de la différence principale et pour des pixels (D, E) qui représentent des déplacements horizontaux par rapport au dit pixel (X) à interpoler les deux différences parallèles sont celles au-dessus et en-dessous de la différence principale ;

   ◆ calcul (33 ; 430-436) dans chaque cas pour les pixels impliqués dans le dit filtre adaptatif d'un ensemble de coefficients de base (VA, VB, VC, VD, VE) qui dépendent des dites sommes dans lequel plus petite est ladite somme plus grande est la contribution du pixel associé dans ledit filtre adaptatif;

   ◆ filtrage linéaire horizontal-vertical (351-356 ; 441-445) de chaque ensemble de coefficients de base pour former des coefficients filtrés (CA, CB, CC, CD, CE) ;

   ◆ calcul de la valeur du pixel à interpoler (X) en combinant (38 ; 492, 494, 496, 498) les valeurs du pixel impliquées dans le dit filtre adaptatif après qu'elles aient été multipliées (371-375 ; 491, 493, 495, 497, 499) par les coefficients filtrés respectifs incluant une normalisation (39 ; 483, 487, 484, 486).

2. Méthode selon la revendication 1, dans laquelle, dans le cas d'un mouvement rapide, les valeurs de correction (36 ; 481, 482, 487, LD+1T) sont combinées (485) avec chacun desdits coefficients filtrés ou avec la valeur pour le dit pixel (X) à interpoler et dans laquelle ces valeurs de correction du mouvement rapide sont prises en compte pour la dite normalisation.

**3.** Méthode selon les revendications 1 ou 2, dans laquelle, avant le dit filtrage linéaire horizontal-vertical, les dits coefficients de base (VA, VB, VC, VD, VE) sont filtrés dans un filtre médian à une dimension (341-345), en particulier horizontalement, et en particulier en utilisant trois échantillons dans une ligne mais étalés sur une fenêtre de cinq échantillons.

**4.** Méthode selon l'une quelconque des revendications 1 à 3, dans laquelle pour ces pixels (A) impliqués dans le dit filtre adaptatif qui sont temporellement adjacents et dans un emplacement spatial identique par rapport au pixel (X) à interpoler, deux desdites sommes (SA, SA') correspondant aux pixels horizontaux et verticaux adjacents sont calculées et soit les deux ou le minimum des deux sont utilisées pour calculer lesdits coefficients de base.

**5.** Méthode selon l'une quelconque des revendications 2 à 4, dans laquelle pour calculer (36 ; 481, 482, 487, LD+1T) les valeurs de correction du mouvement rapide (MC) pour chaque pixel une somme S des dits coefficients filtrés est produite et ajoutée (484) à un indicateur de mouvement rapide CF, par exemple

$$CF = \max \{1/2 * S_{max} - S, 0\},$$

dans laquelle $S_{max}$ est une valeur maximum nominale de la somme S.

**6.** Méthode selon l'une quelconque des revendications 2 à 5, dans laquelle pour calculer (36 ; 481, 482, 487, LD+1T) les dites valeurs de correction du mouvement rapide une fenêtre en forme de croix de cinq pixels est utilisée.

**7.** Méthode selon l'une quelconque des revendications 1 à 6, dans laquelle le dit filtre adaptatif est appliqué seulement à la composante de luminance.

**8.** Appareil pour la conversion vers le haut de la fréquence image utilisant une interpolation adaptative dans laquelle une valeur de pixel (X) pour une image (IP) à interpoler est calculée en utilisant un filtre adaptatif dont l'entrée est formée des valeurs du pixel d'origine entourant spatialement-temporellement cette valeur du pixel à interpoler (X), caractérisé par:

- ◆ un premier moyen de calcul (32 ; DA1-DAIII, 411-418, 421-426) pour calculer (32 ; DA1-DAIII) des différences principales entre des pixels d'entrée impliqués (A, B, C, D, E) dans le filtre adaptatif, dans chaque cas entre un pixel d'entrée courant et un pixel opposé autant que possible au pixel d'entrée par rapport au pixel (X) à interpoler, dans lequel « opposé » signifie un pixel d'entrée correspondant à l'angle de déviation minimum à l'intérieur des pixels d'entrée entourant spatialement-temporellement les dits pixels (X) à interpoler

et pour calculer (32 ; 411-418, 421-426) dans chaque cas pour une valeur de pixel (X) à interpoler, la somme (SA, SA', SB, SC, SD, SE) de la valeur absolue d'une différence principale et des deux valeurs absolues pour des différences entre des pixels d'entrée adjacents qui sont disposés en parallèle par rapport à la différence principale courante, dans lequel pour des pixels d'entrée (B, C) qui représentent des déplacements verticaux par rapport au pixel (X) à interpoler les deux différences parallèles sont celles vers la gauche et vers la droite de la différence principale et pour des pixels (D, E) qui représentent des déplacements horizontaux par rapport au dit pixel (X) à interpoler les deux différences parallèles sont celles au-dessus et en-dessous de la différence principale ;

- ◆ un second moyen de calcul (33 ; 430-436) pour calculer dans chaque cas pour les pixels impliqués dans ledit filtre adaptatif, un ensemble de coefficients de base (VA, VB, VC, VD, VE) qui dépendent desdites sommes dans lequel plus petite est la dite somme plus grande est la contribution du pixel associé dans ledit filtre adaptatif ;
- ◆ un moyen de filtrage linéaire horizontal-vertical (351-356, 441-445) pour chaque ensemble de coefficients de base pour former des coefficients filtrés (CA, CB, CC, CD, CE) ;
- ◆ un moyen de combinaison (38 ; 492, 494, 496, 498) pour calculer la valeur du pixel (X) à interpoler à partir des valeurs du pixel impliquées dans le filtrage adaptatif après avoir été multipliées dans un moyen de multiplication (371-375, 491, 493, 495, 497, 499) avec les coefficients filtrés respectifs ;

♦ optionnellement, un troisième moyen de calcul (36 ; 481, 482, 487, LD + 1T) pour calculer des valeurs de correction qui sont combinées (485) dans le cas d'un mouvement rapide avec chacun des coefficients filtrés ou avec la valeur pour ledit pixel (X) à interpoler;

♦ un moyen de normalisation (39 ; 483, 487, 484, 486) pour ajuster la valeur pour ledit pixel (X) à interpoler et incluant, dans le cas d'un mouvement rapide, lesdites valeurs de correction.

9.  Appareil selon la revendication 8, dans lequel les moyens de filtrage médian (341-345) sont disposés entre lesdits seconds moyens de calcul (33 ; 430-436) et lesdits moyens de filtrage linéaire horizontal-vertical (351-356 ; 441-445) qui filtre les coefficients de base (VA, VB, VC, VD, VE), uni-dimensionnellement, en particulier horizontalement, et, en particulier, en utilisant trois échantillons dans une ligne mais étendus sur une fenêtre de cinq échantillons.

10. Appareil selon la revendication 8 ou 9 qui fonctionne seulement pour des pixels (X) de luminance à interpoler.

Fig.1

Fig.2A

Fig.2B

Fig.2C

Fig.2D

Fig.3

Fig.4